# EUROPEAN PATENT SPECIFICATION

(11) **EP 3 620 671 B1**
(45) Date of publication and mention of the grant of the patent: **19.04.2023**
(21) Application number: 18193024.9
(22) Date of filing: 06.09.2018
(51) Int. Cl.: F16B 21/18, B60T 15/04

(54) **PISTON ASSEMBLY**
KOLBENANORDNUNG
ENSEMBLE DE PISTON

(43) Date of publication of application: 11.03.2020
(73) Proprietor: KNORR-BREMSE Systeme für Nutzfahrzeuge GmbH, 80809 München (DE)
(72) Inventor: Rizzi, Stefano, 20851 Lissone - MB (IT)
(74) Representative: LifeTech IP Spies & Behrndt Patentanwälte PartG mbB

(56) References cited:
- EP-A1- 1 681 477
- EP-A1- 2 602 495
- DE-A1- 3 203 235
- DE-A1-102007 030 312
- GB-A- 1 223 050
- US-A- 5 876 071

## Description

The present invention relates to a piston assembly for a cylindrical body and, in particular, to a piston group design for a foot brake valve of a pneumatic braking system.

These systems employ a foot brake valve (FBV) to implement a correct pressurization based on a demand of the driver of the commercial vehicle. Such valves involve different pistons and at least one plunger that are clamped to each other. A conventional piston assembly for a foot brake is disclosed in DE 10 2007 030 312 A1, wherein a damper and a force limiter with a spring element are connected in series with the damper. GB 1 223 050 A discloses a releasable coupling for tubes and rods.

These various interacting components make the assembly difficult and there is a demand for a design that allows a fast and cost-efficient assembling and permits an easy disassembly of the group/assembly in case of necessity.

At least some of these problems are overcome by a piston assembly of claim 1 and a foot brake valve according to claim 9. The dependent claims refer to further advantageous realizations of the subject matter of the independent claims.

The present invention relates to a piston assembly for a cylindrical body of a pneumatic braking system. The piston assembly includes an elastic ring with outward protruding end portions, a plunger with an outer circumferential groove for receiving at least partly the elastic ring, and an outer piston with an inner circumferential groove and an opening. The inner circumferential groove is adapted for receiving at least partly the elastic ring while the protruding end portions are placed in the opening. The elastic ring is adapted to attach the plunger to the outer piston in a default state of the elastic ring. Upon moving the outward protruding end portions relative to each other, the elastic ring moves so far into the inner circumferential groove or into the other circumferential groove that plunger and the outer piston are detachable from one another.

The axial direction can be defined as the direction of the displacement/movement of the plunger inside the cylindrical body. The term "groove" shall encompass a recess or a gap which is suitable to accommodate the elastic ring or part thereof. In particular, the circumferential grooves may be realized as a recess formed in a body or as a gap between two parts as long as such groove can receive the elastic ring to enable a fixation of the respective component.

Optionally, the opening of the outer piston is adapted to define means for applying pliers to move the protruding end portions relative to each other. For example, the means for applying pliers may be one or more recesses at the opening in the outer piston and/or one or more engagement portions for the pliers at the end portions of the elastic ring.

Optionally, the opening of the outer piston is formed as a cut portion extending from an axial end portion of the outer piston.

Optionally, the piston assembly further comprises an inner piston extending at least partially inside the outer piston at an axial position opposite to the plunger. The inner piston is adapted to couple to the outer piston so that both components move axially together. In addition, the piston assembly may include a spring that couples between the plunger and the inner piston to provide an axial pressure force. The outer piston and the inner piston may comprise abutment portions to limit a relative axial movement due to the spring and thus provide the axial coupling between the plunger and the inner piston. Since the outer piston and the plunger cannot move axially relative to each other in the default state of the elastic ring, the spring provides a bias force pressing the plunger and the inner piston apart from one another.

Optionally, the plunger comprises a plunger body and one or more protruding portions to define the circumferential groove between a plunger body and the one or more protruding portions. The one or more protruding portions may be arranged to provide an abutment for the spring. Optionally, the protruding portion(s) is a/are unitary part(s) of the plunger body. But they may also be separate elements arranged on a surface of the plunger facing the interior space of the cylindrical body and being fixed by the spring abutment.

Embodiments of the present invention relate also to a foot brake valve for a vehicle which comprises a cylindrical body, and a piston assembly as described before. The piston assembly is arranged in the cylindrical body so that the plunger together with outer piston are axially moveable in the cylindrical body.

The foot brake valve may further comprise a cover for closing the cylindrical body and a sleeve adapted to move axially together with the plunger. The cover may extend inside the sleeve over a stroke of the plunger to provide a lateral guiding.

Embodiments of the present invention relate also to a vehicle with a foot brake valve as described before. The vehicle may be a commercial vehicle and the piston assembly may be part of a braking system of the vehicle.

Some examples of the systems will be described in the following by way of examples only, and with respect to the accompanying figures, in which:
- Fig. 1: depicts a cross-sectional view through the piston assembly according to an embodiment of the present invention.
- Fig. 2: depicts a perspective view of the piston assembly of Fig. 1.
- Fig. 3: depicts the piston group with the piston assembly for a foot brake valve according to yet another embodiment of the present invention.
- Fig. 4: depicts a cross-sectional view of the piston group of Fig. 3 perpendicular to the axial displacement of the piston(s).

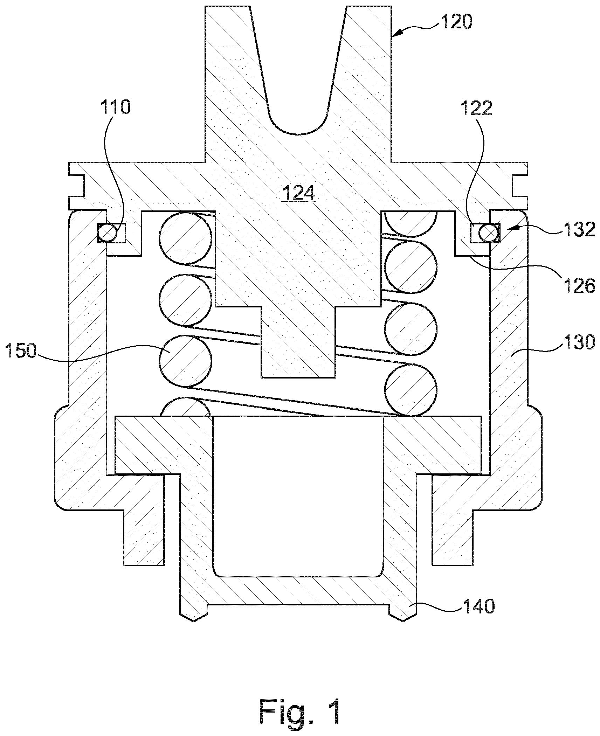

**Fig. 1** depicts a cross-sectional view through the piston assembly comprising an elastic ring 110, a plunger 120 defining an outer circumferential groove 122 for receiving at least partly the elastic ring 110, and an outer piston 130 with an inner circumferential groove 132 for receiving at least partly the elastic ring 110. Hence, the elastic ring 110 is arranged between the plunger 120 and the outer piston 130 to attach both components to each other. In addition, the piston assembly comprises an inner piston 140 arranged inside the outer piston 130 and a spring 150 extending between the inner piston 140 and the plunger 120 to provide a biasing force holding the inner piston 140 away from the plunger 120.

The plunger 120 includes a plunger body 124 and at least one protruding portion 126 which extends into the interior of the outer piston 130 and provides the circumferential groove 122. The protruding portion(s) 126 can be formed uniformly with the plunger body 124. However, according to further embodiments, the protruding portion(s) 126 may be separate elements formed as a stepped portion defining in a radially outer position the circumferential groove 122 and include a part which extends radially inward in the region between the spring 150 and the plunger body 124 so that this part is pressed by the spring 150 onto a shoulder part of the plunger body 124.

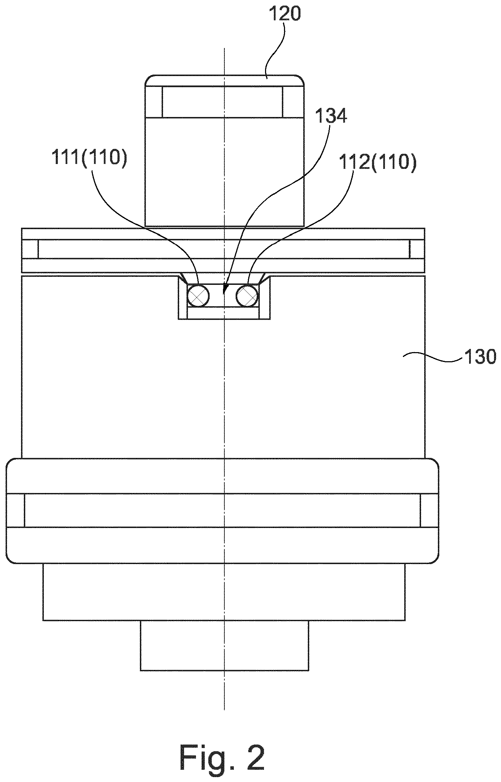

**Fig. 2** depicts a perspective view of the piston assembly with the outer piston 130 and the inserted plunger 120, which are held together by the elastic ring 110 arranged between the plunger 120 and the outer piston 130. The outer piston 130 comprises an opening 134 in which outward protruding end portions 111, 112 of the elastic ring 110 protrude.

The elastic ring 110 is adapted to secure the plunger 120 to the outer piston 130 in a default state of the elastic ring 110 (e.g. expanded state). As shown in Fig. 1 the elastic ring 110 extends partly into the outer circumferential groove 122 and partly into the inner circumferential groove 132 so that in this default state the plunger 120 is interlocked to the outer piston 130. Upon moving the outward protruding end portions 111, 112 relative to each other, the elastic ring 110 moves to such extend into outer circumferential groove 122 (when pressing together) or into the inner circumferential groove 132 (when pulling apart) that plunger 110 and the outer piston 120 are detachable from each other. The shoulder part of the plunger body 124 may provide a cover on the outer piston 130.

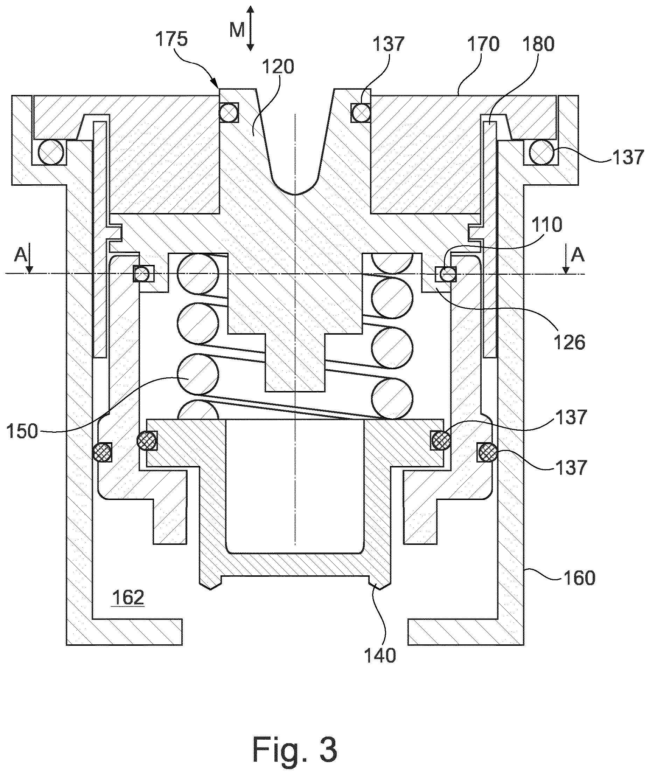

**Fig. 3** depicts the piston group with the piston assembly for an examplary foot brake valve. The piston assembly with the elastic ring 110, the plunger 120, the outer piston 130, and the inner piston 140 is arranged inside a cylindrical body 160 which is closed by a cover 170 through which a rod part of the plunger 120 extends. The plunger 120 together with outer piston 130 and the inner piston 140 can move relative to the cylindrical body 160 along an axial direction M (linear displacement). The cover 170 has an opening 175 for allowing the linear displacement of the plunger 120 therethrough. More precisely, the plunger rod of the plunger 120 extends through the opening 175 and the shoulder part (broadened portion) is arranged in an interior space 162 of the cylindrical body 160.

The depicted piston group further comprises a sleeve 180. The sleeve 180 is arranged between the cover 170 and the cylindrical body 160 and extends moreover between the outer piston 130 and the cylindrical body 160. The sleeve 180 moves relative to the cover 170, but together with the plunger 120 during the linear displacement M through the interior space 162 of the cylindrical body 160. The plunger 120 and the sleeve 180 cannot move relative to each other in the axial direction M, but may rotate relative to each other about the axial direction M. This axial coupling may be implemented by groove/pin coupling 185 involving e.g. protrusions or a protruding ring extending radially inwards from the sleeve 180 and corresponding recesses or grooves formed at an outer circumference of the plunger 120 (or its broadened portion). It may also be implemented the other way around, i.e. the groove/recess is formed in the sleeve 180 and the protrusion(s) on the plunger 120.

Optional sealing elements 137 may be formed between the cover 170 and the plunger 120, between the cover 170 and the cylindrical body 160, between the outer piston 130 and the cylindrical body 160, and between the inner piston 140 and the outer piston 130. These sealing elements 137 may be sealing rings to seal the internal space 162 from the outside during linear displacements M of the plunger 120.

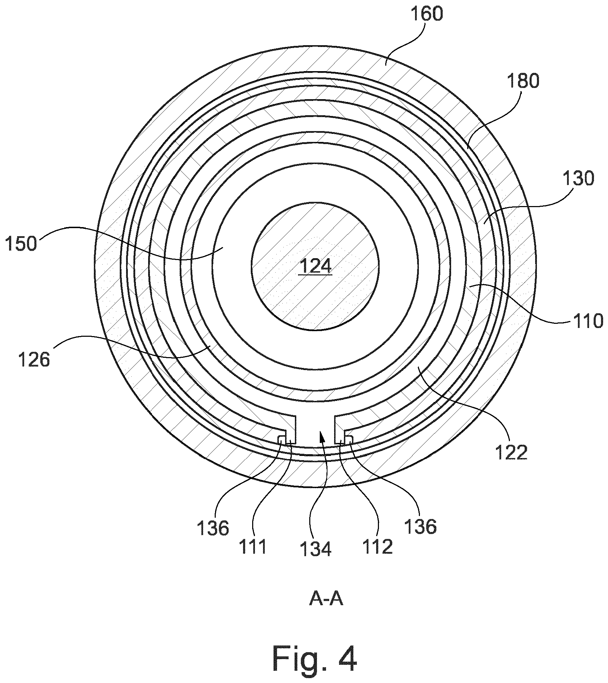

**Fig. 4** depicts a cross-sectional view along the cross-section A-A perpendicular to the axial displacement M of the piston group of Fig. 3. Therefore, the cylindrical body 160 represents an outer housing in which the sleeve 180, the outer piston 130, the elastic ring 110, the outer circumferential groove 122, the protruding portion 126, the spring 150 and the plunger body 124 are formed. The elastic ring 110 is formed such that the protruding end portions 111, 112 extends radially outward into the opening 134 of the outer piston 130 and the outer circumferential groove 122 remains partly empty.

Between the outward protruding end portion 111, 112 a gap is provided. Hence, both end portions 111, 112, can be pushed together thereby pushing the elastic ring 110 into the outer circumferential groove 122 and leaving the inner circumferential groove 132 of the outer piston 130. As a result, the plunger 120 can be separated from the outer piston 130. To simplify this decoupling, recesses 136 may be provided in the opening 134 of the outer piston 130 so that pliers may grab the outward protruding end portions 111, 112 and push both portions together. It is understood that the decoupling of the outer piston 130 and the plunger 120 can be achieved when the elastic ring 110 in the default state leaves part of the inner circumferential groove 132 empty. The interlocking engagement is then opened by pulling apart the outward protruding end portions 111, 112 (into the partly open inner circumferential groove 132).

Advantageous aspects of embodiments can be summarized as follows:
The piston assembly can be part of a piston group with a plunger 120, an outer piston 130, an inner piston 140, a spring 150 and an elastic ring 110. The piston group may be part of the foot brake valve and has the task to control and deliver the pressure in a first circuit of the pneumatic braking system of commercial vehicles proportionally to the deflection of the spring 150.

According to embodiments of the present invention a specific design of the (steel) elastic ring 110 with 90° bent extremities is used to couple the outer piston 130 to the plunger 120. Theses free extremities of the elastic ring 110 can brought together sufficiently close to each other during the assembly process so that the wire collapse inside the groove of the plunger 120 and both can be inserted inside the outer piston 130. The outer piston 130 provides an opening 134 on the top side where the extremities of the elastic ring 110 can fit. The opening 134 is large enough to let the elastic ring 110 fully expand in the groove of the outer piston 130, thus the two parts are locked together. The opening 134 in the outer piston 130 has side recesses 136 for a plier to pinch and tight the extremities of the elastic ring 110 and release the plunger 120 from the outer piston 130.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature described in one embodiment may also be realized in other embodiments. Such combinations are covered by the disclosure herein unless it is stated that a specific combination is not intended.

### LIST OF REFERENCE SIGNS

- 110: elastic ring
- 111, 112: outward protruding end portion(s)
- 120: plunger
- 122: outer circumferential groove
- 124: plunger body
- 126: protruding portion(s) of the plunger body
- 130: outer piston
- 132: inner circumferential groove
- 134: opening in outer piston
- 136: means for applying pliers
- 137: sealing elements
- 140: inner piston
- 150: spring
- 160: cylindrical body
- 162: interior space
- 170: cover
- 175: opening in cover
- 180: sleeve
- 185: groove/pin coupling
- M: linear displacement

## Claims

1. A piston assembly for a cylindrical body of a pneumatic braking system, **characterized by:**
- an elastic ring (110) with outward protruding end portions (111, 112);
- a plunger (120) with an outer circumferential groove (122) for receiving at least partly the elastic ring (110);
- an outer piston (130) with an inner circumferential groove (132) and an opening (134), the inner circumferential groove (132) being adapted for receiving at least partly the elastic ring (110) while the protruding end portions (111, 112) are placed in the opening (134),
wherein the elastic ring (110) is adapted to attach the plunger (120) to the outer piston (130) in a default state of the elastic ring (110) and, upon moving the outward protruding end portions (111,112) relative to each other, the elastic ring (130) moves so far into the inner circumferential groove (132) or into the other circumferential groove (122) that plunger (110) and the outer piston (120) are detachable from each other.

2. The piston assembly of claim 1,
**characterized in that**
the opening (134) of the outer piston (130) is adapted to define means (136) for applying pliers to move the protruding end portions (111, 112) relative to each other.

3. The piston assembly of claim 2,
**characterized in that**
the means (136) for applying pliers are at least one of the following:
- a recess (136) at the opening (134) in the outer piston (130),
- one or more engagement portions for the pliers at the end portions (111, 112) of the elastic ring (110).

4. The piston assembly according to one of the preceding claims,
**characterized in that**
the opening (134) of the outer piston (130) is formed as a cut portion extending from an axial end portion of the outer piston (130).

5. The piston assembly according to one of the preceding claims,
**characterized by**
an inner piston (140) extending at least partially inside the outer piston (130) at an axial position opposite to the plunger (120) and adapted to couple to the outer piston (130) to move axially together.

6. The piston assembly according to claim 5,
**characterized by**
a spring (150) coupling between the plunger (120) and the inner piston (140) to provide an axial pressure force; and
**in that**
the outer piston (130) and the inner piston (140) comprise abutment portions to limit a relative axial movement due to the spring (150) and thus providing the axial coupling between the plunger (120) and the inner piston (140).

7. The piston assembly according to one of the preceding claims,
**characterized in that**
the plunger (120) comprises a plunger body (124) and one or more protruding portions (126) to define the circumferential groove (122) between a plunger body (124) and the one or more protruding portions (126).

8. The piston assembly according to claim 7, referring back to claim 6,
**characterized in that**
the one or more protruding portions (126) are arranged to provide an abutment for the spring (150).

9. A foot brake valve for a vehicle,
**characterized by**
a cylindrical body (160); and
a piston assembly according to one of the preceding claims arranged in the cylindrical body (160) so that the plunger (120) together with outer piston (130) are axially moveable in the cylindrical body (160).

10. The foot brake valve of claim 9,
**characterized by**
a cover (170) closing the cylindrical body (160) and a sleeve (180) adapted to move axially together with the plunger (120), wherein the cover (170) extends inside the sleeve (180) over a stroke of the plunger (120) to provide a lateral guiding.

11. A vehicle, especially a commercial vehicle, with a foot brake valve according to claim 9 or claim 10.

## Patentansprüche

1. Kolbenanordnung für einen zylindrischen Körper eines pneumatischen Bremssystems,
**gekennzeichnet durch:**
- einen elastischen Ring (110) mit nach außen hervorstehenden Endabschnitten (111, 112);
- einen Tauchkolben (120) mit einer Außenumfangsnut (122), um den elastischen Ring (110) zumindest teilweise aufzunehmen;
- einen Außenkolben (130) mit einer Innenumfangsnut (132) und einer Öffnung (134), wobei die Innenumfangsnut (132) dazu ausgelegt ist, den elastischen Ring (110) zumindest teilweise aufzunehmen, während die hervorstehenden Endabschnitte (111, 112) in der Öffnung (134) platziert werden,
wobei der elastische Ring (110) dazu ausgelegt ist, den Tauchkolben (120) an dem Außenkolben (130) in einem Standardzustand des elastischen Rings (110) zu befestigen, und wobei sich bei Bewegen der nach außen hervorstehenden Endabschnitte (111, 112) relativ zueinander der elastische Ring (130) so weit in die Innenumfangsnut (132) oder in die andere Umfangsnut (122) bewegt, dass der Tauchkolben (110) und der Außenkolben (120) voneinander lösbar sind.

2. Kolbenanordnung nach Anspruch 1,
**dadurch gekennzeichnet, dass**
die Öffnung (134) des Außenkolbens (130) dazu ausgelegt ist, Mittel (136) zum Anlegen einer Zange zu definieren, um die hervorstehenden Endabschnitte (111, 112) relativ zueinander zu bewegen.

3. Kolbenanordnung nach Anspruch 2,
**dadurch gekennzeichnet, dass**
die Mittel (136) zum Anlegen einer Zange mindestens eines von Folgendem sind:
- eine Aussparung (136) an der Öffnung (134) in dem Außenkolben (130),
- ein oder mehrere Eingriffsabschnitte für die Zange an den Endabschnitten (111, 112) des elastischen Rings (110).

4. Kolbenanordnung nach einem der vorhergehenden Ansprüche,
**dadurch gekennzeichnet, dass**
die Öffnung (134) des Außenkolbens (130) als ein ausgeschnittener Abschnitt ausgebildet ist, der sich von einem axialen Endabschnitt des Außenkolbens (130) erstreckt.

5. Kolbenanordnung nach einem der vorhergehenden Ansprüche,
**gekennzeichnet durch**
einen Innenkolben (140), der sich zumindest teilweise in dem Außenkolben (130) an einer axialen Position gegenüber dem Tauchkolben (120) erstreckt und dazu ausgelegt ist, mit dem Außenkolben (130) gekoppelt zu werden, um sich gemeinsam axial zu bewegen.

6. Kolbenanordnung nach Anspruch 5,
**gekennzeichnet durch**
eine Feder(150)-Kopplung zwischen dem Tauchkolben (120) und dem Innenkolben (140), um eine axiale Druckkraft bereitzustellen; und
**dadurch, dass**
der Außenkolben (130) und der Innenkolben (140) Widerlagerabschnitte umfassen, um eine relative axiale Bewegung aufgrund der Feder (150) zu begrenzen und somit die axiale Kopplung zwischen dem Tauchkolben (120) und dem Innenkolben (140) bereitzustellen.

7. Kolbenanordnung nach einem der vorhergehenden Ansprüche,
**dadurch gekennzeichnet, dass**
der Tauchkolben (120) einen Tauchkolbenkörper (124) und einen oder mehrere hervorstehende Abschnitte (126) umfasst, um die Umfangsnut (122) zwischen einem Tauchkolbenkörper (124) und dem einen oder den mehreren hervorstehenden Abschnitten (126) zu definieren.

8. Kolbenanordnung nach Anspruch 7, rückbezogen auf Anspruch 6,
**dadurch gekennzeichnet, dass**
der eine oder die mehreren hervorstehenden Abschnitte (126) derart angeordnet sind, dass sie ein Widerlager für die Feder (150) bereitstellen.

9. Fußbremsventil für ein Fahrzeug,
**gekennzeichnet durch**
einen zylindrischen Körper (160); und
eine Kolbenanordnung nach einem der vorhergehenden Ansprüche, die in dem zylindrischen Körper (160) derart angeordnet ist, dass der Tauchkolben (120) zusammen mit dem Außenkolben (130) in dem zylindrischen Körper (160) axial bewegbar sind.

10. Fußbremsventil nach Anspruch 9,
**gekennzeichnet durch**
eine Abdeckung (170), die den zylindrischen Körper (160) verschließt, und eine Hülse (180), die dazu ausgelegt ist, sich zusammen mit dem Tauchkolben (120) axial zu bewegen, wobei sich die Abdeckung (170) in der Hülse (180) über einen Hub des Tauchkolbens (120) erstreckt, um eine seitliche Führung bereitzustellen.

11. Fahrzeug, insbesondere Nutzfahrzeug, mit einem Fußbremsventil nach Anspruch 9 oder Anspruch 10.

## Revendications

1. Ensemble de piston pour un corps cylindrique d'un système pneumatique de freinage, **caractérisé par** :
- une bague (110) élastique ayant des parties (111, 112) d'extrémité en saillie vers l'extérieur ;
- un plongeur (120) ayant une rainure (122) circonférentielle extérieure pour recevoir au moins en partie la bague (110) élastique ;
- un piston (130) extérieur ayant une rainure (132) circonférentielle intérieure et une ouverture (134), la rainure (132) circonférentielle intérieure étant conçue pour recevoir au moins partiellement la bague (110) élastique, alors que les parties (111, 112) d'extrémité en saillie sont placées dans l'ouverture (134),
dans lequel la bague (110) élastique est conçue pour fixer le plongeur (120) au piston (130) extérieur dans un état de défaut de la bague (110) élastique et, après déplacement des parties (111, 112) d'extrémité en saillie vers l'extérieur l'une par rapport à l'autre, la bague (130) élastique se déplace si loin dans la rainure (132) circonférentielle intérieure ou dans l'autre rainure (122) circonférentielle, que le plongeur (110) et le piston (120) extérieur peuvent être détachés l'un de l'autre.

2. Ensemble de piston suivant la revendication 1,
**caractérisé en ce que**
l'ouverture (134) du piston (130) extérieur est conçue pour définir des moyens (136) d'application de pinces pour déplacer les parties (111, 112) d'extrémité en saillie l'une par rapport à l'autre.

3. Ensemble de piston suivant la revendication 2,
**caractérisé en ce que**
les moyens (136) d'application de pinces sont au moins l'un de ce qui suit :
- un chambrage (136) à l'ouverture (134) du piston (130) extérieure,
- une ou plusieurs parties de pénétration des pinces aux parties (111, 112) d'extrémité de la bague (110) élastique.

4. Ensemble de piston suivant l'une des revendications précédentes,
**caractérisé en ce que**
l'ouverture (134) du piston (130) extérieur est formée sur une partie coupée s'étendant à partir d'une partie d'extrémité axiale du piston (130) extérieur.

5. Ensemble de piston suivant l'une des revendications précédentes,
**caractérisé par**
un piston (140) intérieur, s'étendant au moins partiellement à l'intérieur du piston (130) extérieur en une position axiale opposée au plongeur (120) et conçu pour s'accoupler au piston (130) extérieur afin de se déplacer ensemble axialement.

6. Ensemble de piston suivant la revendication 5,
**caractérisé par**
un ressort (150) d'accouplement entre le plongeur (120) et le piston (140) intérieur pour donner une force de pression axiale ; et
**en ce que**
le piston (130) extérieur et le piston (140) intérieur comprennent des parties de butée pour limiter un mouvement axial relatif dû au ressort (150) et donnant ainsi l'accouplement axial entre le plongeur (120) et le piston (140) intérieur.

7. Ensemble de piston suivant l'une des revendications précédentes,
**caractérisé en ce que**
le plongeur (120) comprend un corps (124) de plongeur et une ou plusieurs parties (126) en saillie pour définir la rainure (122) circonférentielle entre un corps (124) du plongeur et la une ou les plusieurs parties (126) en saillie.

8. Ensemble de piston suivant la revendication 7, lorsqu'elle se rapporte à la revendication 6,
**caractérisé en ce que**
la une ou les plusieurs parties (126) en saillie sont disposées pour donner une butée au ressort (150).

9. Soupape de frein à pied d'un véhicule,
**caractérisé par**
un corps (160) cylindrique ; et
un ensemble de piston suivant l'une des revendications précédentes disposé dans le corps (160) cylindrique, de manière à ce que le plongeur (120) puisse, ensemble avec le piston (130) extérieur, se déplacer axialement dans le corps (160) cylindrique.

10. Soupape de frein à pied suivant la revendication 9,
**caractérisé par**
un couvercle (170) fermant le corps (160) cylindrique et un manchon (180) conçu pour se déplacer ensemble axialement avec le plongeur (120), dans lequel le couvercle (170) s'étend à l'intérieur du manchon (180) sur une course du plongeur (120) pour donner un guidage latéral.

11. Véhicule, en particulier véhicule industriel, ayant une soupape de frein à pied suivant la revendication 9 ou la revendication 10.
